# EUROPÄISCHE PATENTSCHRIFT

(11) **EP 1 339 640 B1**
(45) Veröffentlichungstag und Bekanntmachung des Hinweises auf die Patenterteilung: **26.05.2004**
(21) Anmeldenummer: 01996512.8
(22) Anmeldetag: 06.11.2001
(51) Int. Cl.: C01B 33/107

(54) **VERFAHREN ZUR REINIGUNG VON TRICHLORSILAN**
METHOD OF PURIFYING TRICHLOROSILANE
PROCEDE DE PURIFICATION DE TRICHLOROSILANE

(30) Priorität: 20.11.2000 DE 10057482
(43) Veröffentlichungstag der Anmeldung: 03.09.2003
(73) Patentinhaber: SOLARWORLD AKTIENGESELLSCHAFT, 53113 Bonn (DE)
(72) Erfinder: KLEIN, Stephan, 51467 Bergisch Gladbach (DE); BLOCK, Hans-Dieter, 51381 Leverkusen (DE); LEIMKÜHLER, Hans-Joachim, 51375 Leverkusen (DE); DICK, Werner, 51371 Leverkusen (DE); SCHÄFER, Johannes-Peter, 51515 Kürten (DE)
(74) Vertreter: Rau, Albrecht
(86) Internationale Anmeldenummer: PCT/EP2001/012805
(87) Internationale Veröffentlichungsnummer: WO 2002/040401

(56) Entgegenhaltungen:
- EP-A- 0 107 784
- EP-A- 0 285 937
- DE-A- 2 162 537
- DE-B- 1 289 834
- US-A- 2 877 097
- US-A- 3 414 603
- US-A- 4 224 040
- LI K Y ET AL: "Redistribution reaction of trichlorosilane in a fixed-bed reactor" INDUSTRIAL & ENGINEERING CHEMISTRY RESEARCH, Bd. 27, Nr. 9, September 1988 (1988-09), Seiten 1600-1606, XP002193567

## Beschreibung

Die vorliegende Erfindung betrifft ein Verfahren zur Herstellung von Silan und Reinst-Silizium.

Trichlorsilan HSiCl₃ ist ein wertvolles Zwischenprodukt zur Herstellung von Reinst-Silizium, von Dichlorsilan-H₂SiCl₂, von Silan SiH₄ und von Haftvermittlern. Insbesondere wenn Trichlorsilan zur Herstellung von Reinst-Silizium oder hochreinem Silan genutzt werden soll, muss es möglichst frei von allen Verunreinigungen sein, da diese sonst in das Produkt eingeschleppt werden können.

Es ist bereits bekannt, dass Ionenaustauscher mit -NR₃-Gruppen zur Abtrennung von Bortrichlorid BCl₃ aus Siliziumtetrachlorid SiCl₄ geeignet sind (US-A-2 877 097). Daneben werden Chlorsilane über feinteilige, aktive, wasserstoffhaltige Kieselsäure geleitet und so von Bor-Verbindungen befreit (DE 1 134 973 C3).

In DE 2 162 537 A1 ist die Herstellung von Disproportionierungsprodukten von Chlorsilanverbindungen, beispielsweise Trichlorsilan beschrieben, wobei man die Chlorsilanverbindung in einem Festbett in Berührung mit einem Ionenaustauscherharz bringt, das gebundene tertiäre Aminogruppen oder quaternäre Ammoniumgruppen enthält. Das Ionenaustauscherharz wirkt dabei als Katalysator für die Disproportionierungsreaktion. Durch gegebenenfalls in der zu disproportionierenden Chlorsilanverbindung enthaltene Anhydrosäuren, in Form von Halogeniden und Hydriden, beispielsweise BCl₃, BH₃ und HCl wird die Wirksamkeit der katalysierten Disproportionierung beeinträchtigt.

In der DE 1 289 834 A ist die Reinigung von Trichlorsilan von BCl₃ angesprochen, in dem dieses mit einem zum Beispiel basischen Adsorptionsstoff in Berührung gebracht wird, welcher auf einem Trägermaterial aufgebracht ist.

Die EP 0 107 784 A1 beschreibt ein Verfahren zur Reinigung von Trichlorsilan von Bor enthaltenden Unreinheiten. Hierzu wird gasförmiges Trichlorsilan durch ein Bor aus Kieselsäureanhydrid geleitet.

Der Erfindung lag daher die Aufgabe zugrunde, ein einfaches und effektives Verfahren zur Herstellung von Silan und/oder Reinst-Silizium bereitzustellen, wobei Trichlorsilan von Anhydrosäuren in Form von Halogeniden und Hydriden befreit wird und das gereinigte Trichlorsilan in einer Form anfällt, die eine direkt anschließende Disproportionierung erlaubt und wobei sich das Verfahren als Teilschritt eines kontinuierlichen Verfahrens zur Herstellung von hochreinem Silan bzw. von Reinst-Silizium ausgehend von metallurgischem Silizium eignet.

Die Aufgabe wird gelöst durch ein Verfahren zur Entfernung von Anhydrosäuren sowie von Halogenwasserstoffen aus Trichlorsilan, das dadurch gekennzeichnet ist, dass man Trichlorsilan mit festen Basen in Berührung bringt.

Als Anhydrosäuren treten in Trichlorsilan z.B. die Halogenide, etwa Chloride, und Hydride von Elementen der III., IV. und V. Hauptgruppe des Periodensystems auf, wie B, Al, As, Sb, sowie daneben die Halogenide und Hydride von Legierungsbestandteilen der verwendeten Werkstoffe der Apparaturen, in denen die Herstellung oder weitere Behandlung des zu reinigenden Trichlorsilans erfolgt. Solche Legierungsbestandteile sind z.B. Fe, Ni, Cr, Mo. Als Halogenwasserstoff ist insbesondere HCl zu nennen.

Geeignete feste Basen mit denen das zu reinigende Trichlorsilan in Berührung gebracht wird sind bekannt. Beispielsweise eignen sich als feste Basen Verbindungen, die in der DE 2 507 864 A1 beschrieben sind. Es sind beispielsweise solche Feststoffe geeignet, die an einem Gerüst aus Polystyrol, vernetzt mit Divinylbenzol, Amino- oder Alkylenamino-Gruppen tragen. Als Amino- oder Alkylenamino-Gruppen seien beispielsweise genannt: Dimethylamino-, Diethylamino-, Ethylmethylamino-, Di-n-propylamino-, Di-iso-propylamino-, Di-2-chlorethylamino-, Di-2-chlorpropylamino-Gruppen bzw. die entsprechend substituierten Alkylenamino-Gruppen und die jeweiligen Hydrochloride oder aber die durch Methylierung, Ethylierung, Propylierung, Butylierung, Hydroxyethylierung oder Benzylierung daraus gebildeten Trialkylammonium-Gruppen mit Chlorid als Gegenion. Selbstverständlich können im Fall quartärer Ammoniumsalze oder protonierter Ammoniumsalze auch katalytisch wirksame Feststoffe mit anderen Anionen, z.B. Hydroxid, Sulfat, Hydrogensulfat, Bicarbonat u.a. in das erfindungsgemäße Verfahren eingeführt werden, eine Umwandlung in die Chloridform ist unter den Reaktionsbedingungen mit der Zeit aber unvermeidbar, was auch für organische Hydroxygruppen gilt Bevorzugt sind demnach solche Ammoniumsalze, die Chlorid als Gegenion enthalten.

Als feste Basen sind beispielsweise auch Feststoffe geeignet, die aus einem Polyacrylsäure-Gerüst, speziell einem Polyacrylamid-Gerüst bestehen, das z.B. über eine Alkylgruppe Trialkylbenzylammonium gebunden hat.

Im Regelfall sind makroporöse oder mesoporöse Austauscherharze besser als Gelharze geeignet. Weitere geeignete feste Basen sind beispielsweise solche, die auf einem festen anorganischen Gerüst wie Kieselsäure oder Zeolith angebundene organische Aminogruppen der obengenannten Art, z.B. solche mit einer 3-Dimethylaminopropylsiloxy-Gruppe, tragen (US-A-4 701 430). Die geeigneten festen Basen werden üblicherweise in Perlform eingesetzt.

Es ist möglich, die festen Basen durch an sich bekannte Aktivierungs- und Vorbehandlungsmethoden zu behandeln, bevor sie mit dem zu reinigenden Trichlorsilan in Berührung gebracht werden.

Vorzugsweise erfolgt die erfindungsgemäße Behandlung von Trichlorsilan mit den festen Basen in einem Reinigungs-Reaktor, in dem die feste Base vorgelegt wird und durch den das Trichlorsilan strömt.

Insbesondere bevorzugt wird das gereinigte Trichlorsilan in einem sich dem Reinigungs-Reaktor direkt nachgeschalteten Disproportionierungsreaktor disproportioniert.

Im Idealfall ist die einzusetzende feste Base mit dem in einem direkt nachgeschalteten Disproportionierungsreaktor verwendeten Disproportionierungskatalysator identisch.

Ein Nebeneffekt des erfindungsgemäßen Verfahrens besteht darin, dass bei der Kontaktierung des Trichlorsilans mit den oben beispielhaft angeführten festen Basen simultan zur Entfernung von Anhydrosäuren sowie von Halogenwasserstoffen aus dem Trichlorsilan auch Disproportionierungsreaktionen des Trichlorsilans zu Dichlorsilan und Siliziumtetrachlorid ablaufen, so dass der Aufwand für die Durchführung einer nachgeschalteten Disproportionierungsreaktion von Trichlorsilan zu Dichlorsilan oder Silan in nachfolgenden Apparaturen reduziert wird.

Das beschriebene Verfahren kann z.B. in einem Festbettreaktor durchgeführt werden. Es kann beispielsweise bei einem Druck von 1 bis 50 bar, vorzugsweise zwischen 1 und 10 bar betrieben werden. Die Temperaturen können beispielsweise zwischen 0 und 180°C liegen, vorzugsweise zwischen 50 und 110°C. Die einzustellende Temperatur richtet sich nach dem Stabilitätsbereich der eingesetzten katalytisch wirksamen Feststoffe.

Um einen kontinuierlichen Betrieb zu gewährleisten, können zwei oder mehr mit fester Base versehene Reaktoren parallel geschaltet sein. In regelmäßigen Abständen kann auf einen mit frischer fester Base versehenen Reaktor umgeschaltet werden, um die vollständige Entfernung der Anhydrosäuren sowie von Halogenwasserstoffen aus dem zu reinigenden Trichlorsilan zu garantieren, während die verbrauchte feste Base ausgetauscht und gegebenenfalls regeneriert wird. Ebenso kann ein Reaktor durch eine Hintereinanderschaltung mehrerer Reaktoren ausgeführt werden.

Das erfindungsgemäße Verfahren kann beispielsweise eingesetzt werden in Prozessen zur Herstellung von Dichlorsilan und Silan und als Teilschritt von Prozessen zur Herstellung von Reinst-Silizium aus Silan.

Bevorzugt wird das erfindungsgemäße Verfahren in ein Gesamtverfahren zur Herstellung von Silan und/oder Reinst-Silizium integriert.

Besonders bevorzugt wird das erfindungesgemäße Verfahren in ein Verfahren zur Herstellung von Silan und/oder Reinst-Silizium integriert, das aus folgenden Schritten besteht:
1. Trichlorsilan-Synthese aus Silizium, Siliziumtetrachlorid, Wasserstoff und gegebenenfalls einer weiteren Chlorquelle in einem Wirbelschicht-Reaktor unter Druck mit anschließender destillativer Isolierung des erzeugten Trichlorsilans und Rückführung des nicht umgesetzten Siliziumtetrachlorids und gewünschtenfalls des nicht umgesetzten Wasserstoffs.
2. Erfindungsgemäße Entfernung von Anhydrosäuren sowie von Halogenwasserstoffen aus dem Trichlorsilan durch Kontaktierung des Trichlorsilans mit festen Basen.
3. Disproportionierung des Trichlorsilans zu Silan und Siliziumtetrachlorid über die Zwischenstufen Dichlorsilan und Monochlorsilan an basischen Katalysatoren, vorzugsweise Amingruppen enthaltenden Katalysatoren, in apparativ zweistufiger oder einstufiger Ausführung und Rückführung des erzeugten, als Schwersieder anfallenden Siliziumtetrachlorids in die erste Verfahrensstufe.
4. Verwendung des Silans in der im vorangehenden Schritt anfallenden Reinheit oder Reinigung des Silans auf die vom weiteren Verwendungszweck geforderte Reinheit, vorzugsweise durch Destillation, besonders bevorzugt durch Destillation unter Druck.
   und gegebenenfalls
5. Thermische Zersetzung des Silans zu Reinst-Silizium, üblicherweise oberhalb 500°C.

Neben der thermischen Zersetzung an elektrisch beheizten Reinst-Silizium-Stäben ist dazu die thermische Zersetzung in einem Wirbelbett aus Reinst-Silizium-Partikeln geeignet, besonders wenn die Herstellung von solar grade Reinst-Silizium angestrebt ist. Zu diesem Zweck kann das Silan mit Wasserstoff und/oder mit Inertgasen im Mol-Verhältnis 1:0 bis 1:10 gemischt werden.

## Patentansprüche

1. Verfahren zur Herstellung von Silan und/oder Reinst-Silizium durch Umsetzung von Trichlorsilan, wobei
- das Trichlorsilan in einem kontinuierlich arbeitenden Reinigungs-Reaktor zur Entfernung von Anhydrosäuren sowie von Halogenwasserstoffen mit mindestens einer festen Base in Berührung gebracht wird und
- das gereinigte Trichlorsilan in einem dem Reinigungs-Reaktor direkt nachgeschalteten, Disproportionierungsreaktor in Gegenwart eines Disproportionierungskatalysators disproportioniert wird.

2. Verfahren nach Anspruch 1, **dadurch gekennzeichnet, dass** als feste Base solche verwendet werden, die an einem Gerüst aus Polystyrol, vernetzt mit Divinylbenzol, Amino- oder Alkylenamino-Gruppen enthalten.

3. Verfahren nach Anspruch 2, **dadurch gekennzeichnet, dass** es sich bei den Amino- oder Alkylenamino-Gruppen um Dimethylamino-, Diethylamino-, Ethylmethylamino, Di-n-propylamino, Di-ipropylarnino, Di-2-chlorethylamino, Di-2-Chlorpropylamino-Gruppen und deren Hydrochloride oder die durch Methylierung, Ethylierung, Propylierung, Butylierung, Hydroxyethylierung oder Benzylierung daraus gebildeten Trialkylammonium-Gruppen mit Chlorid als Gegenion handelt.

4. Verfahren nach Anspruch 1, **dadurch gekennzeichnet, dass** als feste Base solche verwendet werden, die aus einem Polyacrylsäure-Gerüst bestehen, das Trialkylbenzylammonium gebunden hat.

5. Verfahren nach Anspruch 1, **dadurch gekennzeichnet, dass** als feste Base solche verwendet werden, die auf einem festen anorganischen Gerüst gebundene organische Aminogruppen tragen.

6. Verfahren nach mindestens einem der Ansprüche 1 bis 5, **dadurch gekennzeichnet, dass** der Kontakt zwischen Trichlorsilan und der festen Base in einem oder mehreren Festbettreaktoren durchgeführt wird.

7. Verfahren nach mindestens einem der Ansprüche 1 bis 6, **dadurch gekennzeichnet, dass** bei einem Druck von 1 bis 50 bar und einer Temperatur von 0 bis 180°C gearbeitet wird.

8. Verfahren nach mindestens einem der Ansprüche 1 bis 7, **dadurch gekennzeichnet, dass** die eingesetzte feste Base mit dem verwendeten Disproportionierungskatalysator identisch ist.

## Claims

1. A method for the manufacture of silane and/or super-pure silicon by reaction of trichlorosilane;
- wherein trichlorosilane is contacted with at least one solid base in a purifying reactor of continuous operation for removing anhydrous acids and hydrohalogens; and
- wherein the purified trichlorosilane is disproportionated in the presence of a disproportionation catalyst in a disproportionation reactor that is arranged directly downstream of the purifying reactor.

2. A method according to Claim 1, **characterised in that** the solid bases used are solids carrying amino groups or alkyleneamino groups on a structure of polystyrene, cross-linked with divinylbenzole.

3. A method according to Claim 2, **characterised in that** the amino groups or alkylenamino groups used are: dimethylamino, diethylamino, ethylmethylamino, di-n-propylamino, di-iso-propylamino, di-2-chlorethylamino, di-2-chlorpropylamino groups and their respective hydrochlorides, or the trialkylammonium groups formed from them by methylation, ethylation, propylation, butylation, hydroxyethylation or benzylation with chloride as counterion.

4. A method according to Claim 1, **characterised in that** the solid bases used are solids which consist of a structure of polyacrylic acid that has bound trialkylbenzylammonium.

5. A method according to Claim 1, **characterised in that** the solid bases used are solids carrying organic amino groups on a solid inorganic structure.

6. A method according to at least one of Claims 1 to 5, **characterised in that** trichlorosilane is contacted with the solid base in one or in several fixed-bed reactors.

7. A method according to at least one of Claims 1 to 6, **characterised in that** the reaction is carried out at a pressure ranging from 1 to 50 bar and temperatures ranging from 0 to 180°C.

8. A method according to Claim 1 to 7, **characterised in that** the solid base employed is identical with the disproportionation catalyst used.

## Revendications

1. Procédé de préparation de silane et/ou de silicium de Reinst par conversion de trichlorosilane,
- le trichlorosilane étant amené dans un réacteur de purification fonctionnant en continu pour éliminer les acides anhydres ainsi que les hydrocarbures halogénés avec au moins une base forte en agitation et
- le tricholorosilane purifié étant disproportionné dans un réacteur à disproportion en présence d'un catalyseur à disproportion directement disposé en aval du réacteur de purification.

2. Procédé selon la revendication 1, **caractérisé en ce que** les bases fortes utilisées sont celles qui sont composées de polystyrène, réticulées avec du divinylbenzène, des groupes amino ou alcénylamino.

3. Procédé selon la revendication 2, **caractérisé en ce qu'**il s'agit dans les groupes amino ou alcénylamino de groupes diméthylamino, diéthylamino, éthylamino, di-n-propylamino, di-i-propylamino, di-2-chloréthylamino, di-2-chloropropylamino et de leurs hydrochlorures ou les groupes trialkylamino formés à partir de ceux-ci par méthylation éthylation, propylation, butylation, hydroxylation ou benzylation avec le chlorure comme ion opposé.

4. Procédé selon la revendication 1, **caractérisé en ce que** les bases fortes utilisées sont celles qui sont composées d'acide polyacrylique qui possède un trialkylbenzylammonium lié.

5. Procédé selon la revendication 1, **caractérisé en ce que** les bases fortes utilisées sont celles qui portent une structure forte inorganique liée à un groupe amino organique.

6. Procédé selon au moins l'une des revendications 1 à 5, **caractérisé en ce que** le contact entre le trichlorosilane et les bases fortes est réalisé dans un ou plusieurs réacteurs à lit solide.

7. Procédé selon au moins l'une des revendications 1 à 6, **caractérisé en ce** l'on travaille à une pression de 1 à 50 bars et à une température de 0 à 180°C.

8. Procédé selon au moins l'une des revendications 1 à 7, **caractérisé en ce** la base forte mise en oeuvre est identique au catalyseur de disproportion utilisé.
